# EUROPÄISCHE PATENTSCHRIFT

(11) **EP 2 936 728 B1**
(45) Veröffentlichungstag und Bekanntmachung des Hinweises auf die Patenterteilung: **07.09.2016**
(21) Anmeldenummer: 13814832.5
(22) Anmeldetag: 16.12.2013
(51) Int. Cl.: H04L 9/00, H04L 9/32, G06F 21/64

(54) **VERFAHREN ZUM BETREIBEN EINES PORTABLEN DATENTRÄGERS SOWIE EIN SOLCHER PORTABLER DATENTRÄGER**
METHOD FOR OPERATING A PORTABLE DATA CARRIER AND SUCH A PORTABLE DATA CARRIER
PROCÉDÉ POUR FAIRE FONCTIONNER UN SUPPORT DE DONNÉES PORTABLE AINSI QUE SUPPORT DE DONNÉES PORTABLE DE CE TYPE

(30) Priorität: 21.12.2012 DE 102012025416
(43) Veröffentlichungstag der Anmeldung: 28.10.2015
(73) Patentinhaber: Giesecke & Devrient GmbH, 81677 München (DE)
(72) Erfinder: STOCKER, Thomas, 81739 München (DE)
(86) Internationale Anmeldenummer: PCT/EP2013/003802
(87) Internationale Veröffentlichungsnummer: WO 2014/095031

(56) Entgegenhaltungen:
- JEAN-SÉBASTIEN CORON ET AL: "An Efficient Method for Random Delay Generation in Embedded Software", 6. September 2009 (2009-09-06), CRYPTOGRAPHIC HARDWARE AND EMBEDDED SYSTEMS - CHES 2009 (BOOK SERIES: LECTURE NOTES IN COMPUTER SCIENCES), SPRINGER BERLIN HEIDELBERG, BERLIN, HEIDELBERG, PAGE(S) 156 - 170, XP047029942, ISBN: 978-3-642-04137-2 das ganze Dokument
- OLIVIER BENOIT ET AL: "Efficient Use of Random Delays", INTERNATIONAL ASSOCIATION FOR CRYPTOLOGIC RESEARCH,, Bd. 20060815:200427, 14. August 2006 (2006-08-14), Seiten 1-8, XP061001901, [gefunden am 2006-08-14]
- Sebastian Schinzel: "An Efficient Mitigation Method for Timing Side Channels on the Web", COSADE 2011 - 2nd International Workshop on Constructive Side-Channel Analysis and Secure Design, 25. Februar 2011 (2011-02-25), Seiten 1-6, XP055111850, Gefunden im Internet: URL:http://colonwq.org/_download/cosade-20 11-extended-abstract.pdf [gefunden am 2014-04-03]

## Beschreibung

Die Erfindung betrifft ein Verfahren zum Betreiben eines portablen Datenträgers sowie einen solchen portablen Datenträger. Insbesondere betrifft die Erfindung ein Verfahren zum Betreiben einer Chipkarte oder eines Chipmoduls sowie eine solche Chipkarte oder ein solches Chipmodul.

Portable Datenträger in Form von Chipkarten mit einer Prozessoreinheit, auch Mikroprozessor-Chipkarten oder Prozessorkarten genannt, werden in vielen sicherheitskritischen Bereichen eingesetzt, beispielsweise als Ausweisdokumente, zum Nachweis der Zugangsberechtigung eines Teilnehmers z.B. zu einem Mobilfunknetz oder zur Durchführung von Zahlungsverkehrstransaktionen. Der Einsatz der Chipkarte erfolgt dabei häufig im Zusammenspiel mit einer für die jeweilige Anwendung vorgesehenen Terminaleinrichtung, die dazu ausgestaltet ist, nach einer vorhergehenden Authentisierung auf sicherheitskritische Daten einer solchen Chipkarte zuzugreifen.

Bei der Durchführung von sicherheitskritischen Anwendungen durch einen portablen Datenträger, beispielsweise eine Chipkarte, ist ein Schutz des portablen Datenträgers und der darin hinterlegten sicherheitskritischen Daten, wie beispielsweise kryptographische Schlüssel, vor Angriffen und unberechtigten Manipulationen notwendig.

Es sind diverse Angriffsverfahren bekannt, bei denen physikalische Parameter des portablen Datenträgers während der Programmausführung gemessen werden, um Rückschlüsse auf sicherheitskritische Daten, insbesondere kryptographische Schlüssel, zu ziehen, die bei der Programmausführung zum Einsatz kommen. Beispielsweise wird bei der einfachen Stromanalyse (SPA = Simple Power Analysis) die Stromaufnahme des portablen Datenträgers während des Ablaufs einer Programmroutine gemessen und untersucht. Bei der differentiellen Stromanalyse (DPA = Differential Power Analysis) wird dagegen die Stromaufnahme über viele Programmabläufe hinweg statistisch ausgewertet.

Die vorstehend genannten Angriffe werden allgemein als Seitenkanalangriffe (side channel attacks) bezeichnet, weil der Informationsfluss nicht über den primären Kommunikationskanal des portablen Datenträgers, sondern daran vorbei erfolgt. Abschnitt 16.5 des Buches "Handbuch der Chipkarten" von Wolfgang Rankl und Wolfgang Effing, 5. Auflage, gibt einen Überblick über diverse Angriffs- und Abwehrverfahren bei portablen Datenträgern. Auf Seite 756 dieses Abschnitts wird als eine Maßnahme gegen SPA/DPA-Angriffe, die Verwendung von zufallsgesteuerten Wartezuständen ("Random Wait States", die in der Literatur auch als "Random Delays" bezeichnet werden) beschrieben. Derartige zufallsgesteuerte Wartezustände werden in die von der Prozessoreinheit des portablen Datenträgers auszuführenden Routinen eingefügt, beispielsweise in eine PIN-Routine oder eine Verschlüsselungsroutine, um die "normale" Abarbeitung von Befehlen für eine zufällig bestimmte Zeitdauer zu unterbrechen. Die Verwendung von zufallsgesteuerten Wartezuständen bei der Abarbeitung von Befehlen durch die Prozessoreinheit eines portablen Datenträgers erschwert die für die Stromanalyse erforderliche Synchronisation der Stromkurven. Auf der Prozessoreinheit des portablen Datenträgers können derartige zufallsgesteuerte Wartezustände beispielsweise mittels Programmschleifen implementiert werden, in deren Schleifenkörpern bis auf das Inkrementieren eines Zählers und/ oder das Ausführen eines NOP-Befehls ("no operation") nichts passiert.

Aus dem Dokument Jean-Sebastian Coron et al: "An Efficient Method for Random Delay Generation in Embedded Software", 6. September 2009, Cryptographic Hardware and Embedded Systems - CHES 2009 (Book Series: Lecture Notes in Computer Sciences), pp. 156-170 geht eine Implementierung von Abwehrmaßnahmen gegen Seitenkanalangriffe, die auf zufallsbasierten Wartezeiten basieren, hervor.

Vor diesem Hintergrund liegt der Erfindung die Aufgabe zu Grunde, ein alternatives Verfahren zum Betreiben eines portablen Datenträgers sowie einen entsprechenden portablen Datenträger bereitzustellen, die insbesondere gegenüber SPA- und DPA-Angriffen resistent sind.

Diese Aufgabe wird erfindungsgemäß durch den Gegenstand der unabhängigen Ansprüche gelöst. Vorteilhafte Weiterbildungen der Erfindung sind in den abhängigen Ansprüchen definiert.

Die Erfindung basiert auf dem Grundgedanken, während eines zufallsgesteuerten Wartezustands nicht, wie im Stand der Technik, beispielsweise eine Warteschleife zu durchlaufen, in der "nichts" passiert, sondern diesen zufallsgesteuerten Wartezustand von der Prozessoreinheit dazu zu nutzen, zu überprüfen, ob auf einer Speichereinheit des portablen Datenträgers hinterlegte Daten noch integer oder möglicherweise bereits durch einen Angriff korrumpiert worden sind.

Auf der Basis dieses Grundgedankens wird gemäß einem ersten Aspekt der Erfindung ein Verfahren zum Betreiben eines portablen Datenträgers mit einer Prozessoreinheit zur Abarbeitung von Befehlen und einer Speichereinheit zum Speichern von Daten bereitgestellt, wobei in die Abarbeitung der Befehle, d.h. zwischen den Befehlen, zufallsgesteuerte Wartezustände, insbesondere zur Abwehr von SPA/ DPA-Angriffen, eingefügt werden. Das Verfahren zeichnet sich dadurch aus, dass während eines zufallsgesteuerten Wartezustands von der Prozessoreinheit eine Ist-Prüfsumme über die Daten eines ausgewählten Bereichs der Speichereinheit berechnet wird.

Vorzugsweise umfasst das Verfahren den weiteren Schritt des Vergleichens der über die Daten eines ausgewählten Bereichs der Speichereinheit berechneten Ist-Prüfsumme mit einer Soll- bzw. Referenz-Prüfsumme für die Daten dieses ausgewählten Bereichs der Speichereinheit. Der weitere Betrieb des portablen Datenträgers kann gesperrt werden, falls der Vergleich der Ist-Prüfsumme mit der Soll-Prüfsumme ergibt, dass die Ist-Prüfsumme nicht gleich der Soll-Prüfsumme ist. Vorzugsweise werden die Schritte des Berechnens der Ist-Prüfsumme über die Daten eines ausgewählten Bereichs der Speichereinheit und des Vergleichens der Ist-Prüfsumme mit einer Soll-Prüfsumme innerhalb eines zufallsgesteuerten Wartezustands begonnen und abgeschlossen.

Gemäß bevorzugter Ausführungsformen der Erfindung erstreckt sich die Berechnung der Ist-Prüfsumme über die Daten eines ausgewählten Bereichs der Speichereinheit über mehr als einen zufallsgesteuerten Wartezustand. Vorzugsweise sind die von der Prozessoreinheit abzuarbeitenden Befehle Teil einer Befehlsroutine, wobei die Berechnung der Ist-Prüfsumme über die Daten eines ausgewählten Bereichs der Speichereinheit nach der Abarbeitung des letzten Befehls der Befehlsroutine im Rahmen eines zufallsgesteuerten Wartezustands, eines Ruhezustands oder eines Wartezustand mit einer durch die Prozessoreinheit vorgegebenen Dauer abgeschlossen wird.

Vorzugsweise wird der ausgewählte Bereich der Speichereinheit zur Berechnung der Ist-Prüfsumme über die darin gespeicherten Daten von der Prozessoreinheit auf der Grundlage der Dauer des zufallsgesteuerten Wartezustands ausgewählt.

Gemäß bevorzugter Ausführungsformen der Erfindung ist der zufallsgesteuerte Wartezustand in zwei im Wesentlichen gleich lange Abschnitte unterteilt, wobei während beider Abschnitte des zufallsgesteuerten Wartezustands eine Ist-Prüfsumme über die Daten ein und desselben ausgewählten Bereichs der Speichereinheit berechnet wird.

Vorzugsweise handelt es sich bei der Ist-Prüfsumme um eine CRC-Prüfsumme oder eine kryptographische Prüfsumme, wobei die kryptographische Prüfsumme unter Verwendung eines symmetrischen und/ oder asymmetrischen kryptographischen Verfahrens erzeugt wird, insbesondere basierend auf kryptographischen Hash-Funktionen, wie z. B. SHA-1, MD5, HMAC-SHA1, HMAC-MD5, AES-CBC-MAC und dergleichen, oder basierend auf Signaturen mit geeigneten Signatur-Algorithmen, wie z. B. RSA, DSA, EC-DSA und dergleichen.

Gemäß einem zweiten Aspekt der Erfindung wird ein portabler Datenträger mit einer Prozessoreinheit und einer Speichereinheit bereitgestellt, der dazu ausgestaltet ist, nach einem der vorstehend beschriebenen Verfahren gemäß dem ersten Aspekt der Erfindung betrieben zu werden. Vorzugsweise handelt es sich bei dem portablen Datenträger um eine Chipkarte oder ein Chipkartenmodul.

Ein maßgeblicher Vorteil der Erfindung besteht darin, dass im Vergleich zu den bekannten zufallsgesteuerten Wartezuständen, bei denen "nichts" passiert und die damit eine sehr ähnliche, wenn nicht sogar identische Stromkurve aufweisen, die zufallsgesteuerten Wartezeiten gemäß der Erfindung aufgrund des Zugriffs auf unterschiedliche Bereiche der Speichereinheit mit unterschiedlichen Größen zu unterschiedlichen Stromkurven führen. Für einen Angreifer ist es somit schwieriger, in einer Stromkurve zu bestimmen, wann sich die Prozessoreinheit in einem zufallsgesteuerten Wartezustand befindet.

Weitere Merkmale, Vorteile und Aufgaben der Erfindung gehen aus der folgenden detaillierten Beschreibung mehrerer Ausführungsbeispiele und Ausführungsalternativen hervor. Es wird auf die Zeichnungen verwiesen, in denen zeigen:
- Fig.1: eine schematische Darstellung einer bevorzugten Ausführungsform eines erfindungsgemäßen portablen Datenträgers in Form einer Chipkarte in Kommunikation mit einer Terminaleinrichtung,
- Fig. 2: eine schematische Darstellung einer bevorzugten Betriebsweise der Prozessoreinheit der Chipkarte von Figur 1 bei der Abarbeitung von Kommandos unter Verwendung von zufallsgesteuerten Wartezuständen, und
- Fig. 3: eine schematische Detailansicht eines zufallsgesteuerten Wartezustands von Figur 2 gemäß einer bevorzugten Ausführungsform der Erfindung.

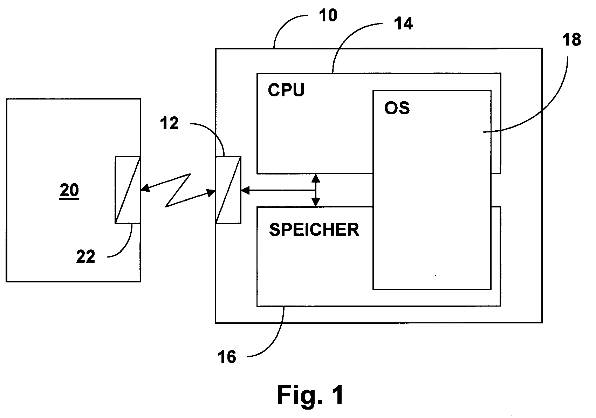

Figur 1 zeigt eine schematische Darstellung einer bevorzugten Ausführungsform eines erfindungsgemäßen portablen Datenträgers in Form einer Chipkarte 10. Die Chipkarte 10 ist dazu ausgestaltet, mit einer externen Instanz in Form einer Terminaleinrichtung 20 Daten auszutauschen. Als ein Austausch von Daten wird hier eine Signalübertragung, eine wechselseitige Steuerung und in einfachen Fällen auch eine Verbindung zwischen der Chipkarte 10 und der Terminaleinrichtung 20 verstanden. Im Allgemeinen kann ein Datenaustausch durch das aus der Informationstheorie bekannte Sender-Empfänger-Modell beschrieben werden: Daten bzw. Informationen werden in Zeichen kodiert und dann von einem Sender über einen Übertragungskanal an einen Empfänger übertragen. Dabei ist entscheidend, dass der Sender und der Empfänger dieselbe Kodierung verwenden, damit der Empfänger die Nachricht verstehen kann, d.h. die empfangenen Daten dekodieren kann.

Zur Datenübertragung bzw. Kommunikation zwischen der Chipkarte 10 und der Terminaleinrichtung 20 weisen sowohl die Chipkarte 10 als auch die Terminaleinrichtung 20 geeignete Kommunikations- bzw. IO-Schnittstellen 12 und 22 auf. Die IO-Schnittstellen 12 und 22 können beispielsweise so ausgestaltet sein, dass die Kommunikation zwischen diesen bzw. zwischen der Chipkarte 10 und der Terminaleinrichtung 20 kontaktlos, d.h. über die Luftschnittstelle, erfolgt, wie dies in Figur 1 angedeutet ist. Alternativ kann die Chipkarte 10 über die IO-Schnittstelle 12 galvanisch, d.h. kontaktbehaftet, mit der IO-Schnittstelle 22 der Terminaleinrichtung 20 in Verbindung stehen. In diesem Fall umfasst die IO-Schnittstelle 12 in der Regel ein auf der Chipkarte 10 angeordnetes Kontaktfeld mit mehreren Kontaktflächen zum Datenaustausch mit der Terminaleinrichtung 20. Selbstverständlich werden von der vorliegenden Erfindung auch portable Datenträger umfasst, bei denen die IO-Schnittstelle 12 sowohl zur kontaktbehafteten als auch zur kontaktlosen Kommunikation mit der Terminaleinrichtung 20 ausgebildet ist und die dem Fachmann im Zusammenhang mit Chipkarten als Dual-Interface-Chipkarten bekannt sind.

Neben der IO-Schnittstelle 12 zur Kommunikation mit der Terminaleinrichtung 20 umfasst der portable Datenträger 10 in Form einer Chipkarte eine zentrale Prozessoreinheit ("central processing unit"; CPU) 14. Bekanntermaßen gehören zu den hauptsächlichen Aufgaben der Prozessoreinheit 14 das Ausführen von arithmetischen und logischen Funktionen und das Lesen und Schreiben von Daten, wie dies durch ein auf der Prozessoreinheit 14 ablaufendes Computerprogramm in Form von Maschinenbefehlen definiert wird.

Der portable Datenträger 10 umfasst ferner eine Speichereinheit ("memory unit") 16 mit einem flüchtigen Arbeitsspeicher (RAM) beispielsweise zur Aufnahme der Maschinenbefehle eines von der Prozessoreinheit 14 auszuführenden Computerprogramms. Ferner umfasst die Speichereinheit 16 einen nichtflüchtigen, vorzugsweise wieder beschreibbaren Speicher. Vorzugsweise handelt es sich bei dem nichtflüchtigen Speicher um einen Flash-Speicher (Flash-EEPROM), der aus einer Vielzahl von Pages bzw. Seiten bestehen kann. Dabei kann es sich beispielsweise um einen Flash-Speicher mit einer NAND- oder einer NOR-Architektur handeln. Selbstverständlich kann die Speichereinheit 16 auch einen Festwertspeicher ("read only memory"; ROM) umfassen.

Wie dies dem Fachmann bekannt ist, kann die Kommunikation zwischen der Prozessoreinheit 14, der Speichereinheit 16, der IO-Schnittstelle 12 und ggf. weiteren Komponenten des portablen Datenträgers 10 in Form einer Chipkarte vorzugsweise über einen oder mehrere Daten-, Adress- und/ oder Steuerbusse erfolgen, wie dies in Figur 1 durch Pfeile schematisch angedeutet ist.

Der Fachmann wird ferner erkennen, dass ein erfindungsgemäßer portabler Datenträger 10 noch weitere als die in Figur 1 dargestellten elektronischen Bauelemente aufweisen kann. So könnte der portable Datenträger 10 beispielsweise ferner eine mit der Prozessoreinheit 14 interagierende Speicherverwaltungseinheit (MMU; "memory management unit") zur Verwaltung der Speichereinheit 16 oder einen Coprozessor zur Durchführung kryptographischer Berechnungen aufweisen. Ferner könnte der portable Datenträger 10 einen UART (universal asynchronous receiver transmitter) umfassen, der auch Teil der IO-Schnittstelle 12 des portablen Datenträgers 10 sein könnte. Wie dies dem Fachmann bekannt ist, handelt es sich bei einem UART um ein unabhängig von der Prozessoreinheit 14 asynchron arbeitendes elektronisches Bauelement zum Senden und Empfangen von Daten. Mit einem UART ist es nicht mehr notwendig, die Kommunikation mit der Terminaleinrichtung 20 auf Bit- und Byteebene von der Prozessoreinheit 14 erledigen zu lassen. Dies führt zu einer Vereinfachung der Kommunikationsprotokolle und kann auch zur Realisierung höherer Datenübertragungsgeschwindigkeiten als bei einer reinen Softwarelösung durch die Prozessoreinheit 14 benutzt werden.

Im nichtflüchtigen Speicher der Speichereinheit 16 ist vorzugsweise ein Betriebssystem 17 hinterlegt, dass im Betrieb der Chipkarte 10 von der Prozessoreinheit 14 ausgeführt wird und von Zeit zu Zeit auf die Speichereinheit 16 zugreift, wie dies in Figur 1 schematisch dargestellt ist. Das Betriebssystem 17 ist insbesondere dazu ausgestaltet, von der Terminaleinrichtung 20 eingehende Kommandos, die vorzugsweise die Form von Kommando-APDUs (command APDUs) haben und Teil größerer Routinen sein können, zu verarbeiten sowie eine entsprechende Antwort zu erstellen und diese, vorzugsweise in Form einer Antwort-APDU (response APDU), wieder an die Terminaleinrichtung 20 zu übermitteln. Für weitere Details hinsichtlich des Aufbaus von APDUs wird auf Abschnitt 8.3 des Buches "Handbuch der Chipkarten" von Wolfgang Rankl und Wolfgang Effing, 5. Auflage verwiesen, auf das hiermit vollumfänglich Bezug genommen wird.

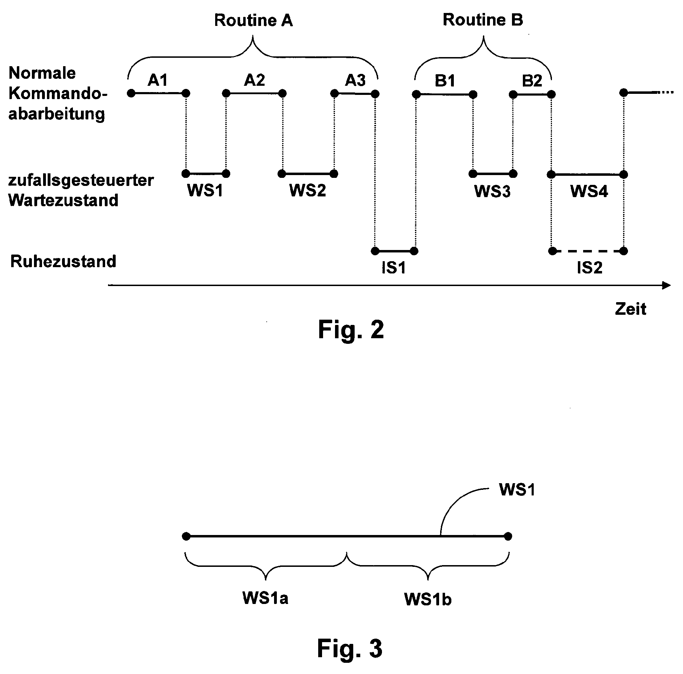

Figur 2 zeigt eine schematische Darstellung einer erfindungsgemäß bevorzugten Betriebsweise der Chipkarte 10 bei der Abarbeitung von Kommandos bzw. Befehlen durch deren Prozessoreinheit 14, die jeweils Teil einer umfangreicheren Routine sein können. Dabei sind über einer Zeitachse drei verschiedene Zustände dargestellt, in denen sich die Prozessoreinheit 14 befinden kann, und zwar in einem Zustand der "normalen" Kommandoabarbeitung, in einem zufallsgesteuerten Wartezustand ("Random Wait State") oder in einem Ruhezustand ("Idle State").

In Figur 2 beginnt die Prozessoreinheit 14 beispielhaft damit das Kommando A1 abzuarbeiten, das Teil der Routine A ist, bei der es sich beispielsweise um eine PIN-Routine oder eine Verschlüsselungsroutine handeln könnte. Das Kommando A1 kann auf einer von der Terminaleinrichtung 20 stammenden Kommando-APDU basieren. Alternativ oder zusätzlich kann das Kommando A1 bzw. die Routine A Teil einer Applikation sein, die auf dem portablen Datenträger 10 ausgeführt wird.

Nach der Abarbeitung des Kommandos A1 tritt die Prozessoreinheit 14 in einen zufallsgesteuerten Wartezustand WS1 ein, wobei die Dauer des Wartezustands zufällig bestimmt ist. Wie vorstehend beschrieben, dient ein solcher zufallsgesteuerter Wartezustand insbesondere dazu, einen SPA/ DPA-Angriff ins Leere laufen zu lassen, da es aufgrund der zufälligen, nicht vorhersagbaren Dauer der Wartezustände nicht möglich ist, unterschiedliche Stromkurven zu synchronisieren und mittels statistischer Verfahren Rückschlüsse auf die in die Abarbeitung einfließenden Daten zu ziehen. Diese Verwendung von zufallsgesteuerten Wartezuständen zur Abwehr von SPA/DPA-Angriffen ist dem Fachmann prinzipiell bekannt, so dass weitere Details hierzu nicht beschrieben werden müssen.

Erfindungsgemäß ist nun vorgesehen, dass während des zufallsgesteuerten Wartezustands WS1 nicht, wie im Stand der Technik, von der Prozessoreinheit 14 eine Warteschleife durchlaufen wird, in der "nichts" passiert, sondern dass der zufallsgesteuerte Wartezustand WS1 von der Prozessoreinheit 14 dazu genutzt wird, wenigstens eine weitere Abwehrmaßnahe gegen potentielle Angriffe auf den portablen Datenträger 10 durchzuführen. Vorzugsweise wird der zufallsgesteuerte Wartezustand WS1 dazu verwendet, zu überprüfen, ob auf der Speichereinheit 16 hinterlegte Daten noch integer oder möglicherweise durch einen Angriff bereits korrumpiert worden sind. Hierzu wird zunächst ein zu überprüfender Bereich der Speichereinheit 16 ausgewählt, beispielsweise ein Bereich der Speichereinheit 16, in dem sicherheitskritische Daten hinterlegt sind, und mittels der dort hinterlegten Daten eine Ist-Prüfsumme berechnet. Wie dies dem Fachmann bekannt ist, kann mittels eines Vergleichs der so bestimmten Ist-Prüfsumme mit einer zu einem früheren Zeitpunkt auf der Grundlage derselben Daten berechneten Soll-Prüfsumme überprüft werden, ob die Daten verändert worden sind. Falls die Ist-Prüfsumme von der Soll-Prüfsumme abweicht, könnte dies auf einen Angriff hindeuten, bei dem die in dem überprüften Bereich der Speichereinheit 16 hinterlegten Daten korrumpiert worden sind, indem beispielsweise ein oder mehrere Bits gekippt worden sind, was dem Fachmann auch als Bit-Flip bekannt ist. Gemäß bevorzugter Ausführungsformen der Erfindung könnte die Soll-Prüfsumme über den ausgewählten Bereich der Speichereinheit 16 bei der Initialisierung bzw. Personalisierung des portablen Datenträgers 10 erstellt und in der Speichereinheit 16 hinterlegt worden sein. Auch der Vergleich zwischen der Soll-Prüfsumme und der Ist-Prüfsumme der Daten aus dem ausgewählten Bereich der Speichereinheit 16 kann während des zufallsgesteuerten Wartezustands WS1 erfolgen.

In der beispielhaften schematischen Darstellung von Figur 2 folgt dem zufallsgesteuerten Wartezustand WS1 das von der Prozessoreinheit 14 abzuarbeitende Kommando A2, dem wiederum ein weiterer zufallsgesteuerter Wartezustand, nämlich der zufallsgesteuerte Wartezustand WS2 folgt. Wie beim zufallsgesteuerten Wartezustand WS1 basiert auch die Dauer des zufallsgesteuerten Wartezustands WS2, die in Figur 2 beispielhaft ein wenig länger als die Dauer des zufallsgesteuerten Wartezustands WS1 ist, auf einer Zufallszahl. Erfindungsgemäß wird auch dieser weitere zufallsgesteuerte Wartezustand WS2 dazu genutzt, um zu überprüfen, ob in einem ausgewählten Bereich der Speichereinheit 16 hinterlegte Daten noch integer oder möglicherweise durch einen Angriff korrumpiert worden sind, indem eine Ist-Prüfsumme über die Daten eines ausgewählten Bereichs der Speichreinheit 16 gebildet wird und mit einer Soll-Prüfsumme verglichen wird. Dem zufallsgesteuerten Wartezustand WS2 folgt wiederum ein von der Prozessoreinheit 14 abzuarbeitendes Kommando, nämlich das Kommando A3, mit dessen Abarbeitung die beispielhafte Routine A abgeschlossen wird.

Gemäß bevorzugter Ausführungsformen der Erfindung können die jeweiligen Berechnungen der Ist-Prüfsummen sowie die jeweiligen Vergleiche mit den entsprechenden Soll-Prüfsummen in den zufallsgesteuerten Wartezuständen WS1 und WS2 unabhängig voneinander erfolgen, d.h. während des zufallsgesteuerten Wartezustands WS1 kann eine Ist-Prüfsumme über die Daten eines ersten ausgewählten Bereichs der Speichereinheit 16 gebildet werden und mit einer entsprechenden Soll-Prüfsumme verglichen werden und während des zufallsgesteuerten Wartezustands WS2 kann eine weitere Ist-Prüfsumme über die Daten eines zweiten ausgewählten Bereichs der Speichereinheit 16 gebildet werden, der sich vom ersten ausgewählten Bereich der Speichereinheit 16 unterscheidet, und mit einer entsprechenden Soll-Prüfsumme verglichen werden.

Alternativ kann erfindungsgemäß vorgesehen sein, dass die Berechnungen der Ist-Prüfsummen in den zufallsgesteuerten Wartezuständen WS1 und WS2 über einen zusammenhängenden Bereich der Speichereinheit 16 durchgeführt werden. Mit anderen Worten: ein Zwischenergebnis der mit dem zufallsgesteuerten Wartezustand WS1 begonnenen Prüfsummenberechnung über einen ausgewählten Bereich der Speichereinheit 16 kann am Ende des zufallsgesteuerten Wartezustands WS1 gespeichert werden und die Berechnung der Ist-Prüfsumme kann auf der Grundlage dieses Zwischenergebnisses nach der Abarbeitung des Kommandos A2 mit dem anschließenden zufallsgesteuerten Wartezustand WS2 wieder aufgenommen werden, während dem vorzugsweise dann auch der Vergleich mit einer entsprechenden Soll-Prüfsumme erfolgt. Selbstverständlich können sich erfindungsgemäß eine Prüfsummenberechnung und ein Vergleich mit einer Soll-Prüfsumme auch über mehr als zwei zufallsgesteuerte Wartezustände erstrecken.

Da es zu Beginn einer Routine vorkommen kann, dass nicht genau bekannt ist, wie viele zufallsgesteuerte Wartezustände in der Routine auftreten und wie lange diese dauern werden, kann der Fall eintreten, dass die in eine Routine eingefügten zufallsgesteuerten Wartezustände nicht dazu ausreichen, die Prüfsummenberechnung über einen ausgewählten Bereich der Speichereinheit 16 vollständig abzuschließen, beispielsweise weil der ausgewählte Bereich der Speichereinheit 16 zu groß ist. Um das Speichern des Zwischenergebnisses einer Prüfsummenberechnung über eine von der Prozessoreinheit 14 abgearbeitete Routine hinaus zu vermeiden, ist es gemäß bevorzugter Ausführungsformen der Erfindung möglich, den Rest der Prüfsummenberechnung (sowie den Vergleich mit einer entsprechenden Soll-Prüfsumme) im Anschluss an die abgearbeitete Routine durchzuführen. Hierfür ist die Prozessoreinheit 14 vorzugsweise dazu ausgestaltet, einen weiteren zufallsgesteuerten Wartezustand an die abgearbeitete Routine anzuhängen, wie dies in Figur 2 beispielhaft anhand der Routine B und des Wartezustands WS4 dargestellt ist.

Bei der in Figur 2 dargestellten Routine B tritt die Prozessoreinheit 14 nach der Abarbeitung eines ersten Kommandos B1 in den zufallsgesteuerten Wartezustand WS3 ein und beginnt mit der Berechnung einer Ist-Prüfsumme über einen ausgewählten Bereich der Speichereinheit 16. Die Berechnung der Ist-Prüfsumme wird unterbrochen, sobald der zufallsgesteuerte Wartezustand WS3 beendet ist und die Prozessoreinheit 14 mit der Abarbeitung des Kommandos B2 beginnt. Das Zwischenergebnis kann zwischen gespeichert werden, beispielsweise in Form des bisher ermittelten Werts der Ist-Prüfsumme inklusive Informationen darüber, wie weit die Berechnung bisher gekommen ist, beispielsweise die Adresse des letzten Datenelements, das in die Berechnung der Prüfsumme eingeflossen ist. Obwohl die Prozessoreinheit 14 mit der Abarbeitung des Kommandos B2 auch die Abarbeitung der in Figur 2 dargestellten beispielhaften Routine B abschließt, ist die im zufallsgesteuerten Wartezustand WS3 begonnene Prüfsummenberechnung noch nicht abgeschlossen. Daher ist in einem solchen Fall erfindungsgemäß vorgesehen, dass sich an die Abarbeitung des Kommandos B2 und damit die Routine B ein weiterer zufallsgesteuerter Wartezustand WS4 anschließt, innerhalb dessen die Berechnung der Ist-Prüfsumme über die noch nicht berücksichtigten Daten des ausgewählten Bereichs der Speichereinheit 18 abgeschlossen und der Vergleich mit einer entsprechenden Soll-Prüfsumme durchgeführt werden kann.

Wie vorstehend beschrieben, kann die Dauer des Wartezustands WS4 erfindungsgemäß zufällig sein. Alternativ kann die Dauer des Wartezustands WS4 von der Prozessoreinheit 14 bestimmt werden, d.h. diese wird nicht beispielsweise von einem Zufallszahlengenerator als Zufallszahl vorgegebenen, sondern von der Prozessoreinheit 14 beispielsweise auf der Grundlage der Menge der Daten des ausgewählten Bereichs der Speichereinheit 16, die bisher noch nicht in die Prüfsummenberechnung eingeflossen sind, bestimmt. Wie der Fachmann erkennt, wird die so von der Prozessoreinheit 14 bestimmte Dauer des Wartezustands WS4 bei jeder Bearbeitung der Routine B unterschiedlich groß sein, da auch die Dauer des zufallsgesteuerten Wartezustands WS3 bei jeder Bearbeitung unterschiedlich groß sein wird.

Gemäß einer weiteren Alternative der Erfindung könnte die Prozessoreinheit 14 nach der Abarbeitung des Kommandos B2 statt in den zufallsgesteuerten Wartezustand WS4 auch in einen Ruhezustand ("Idle State") IS2 eintreten, um die Berechnung der Ist-Prüfsumme abzuschließen und diese mit einer entsprechenden Soll-Prüfsumme zu vergleichen, wie dies in Figur 2 schematisch durch den gestrichelten Ruhezustand IS2 dargestellt ist. Der Ruhezustand ("Idle State") ist dadurch gekennzeichnet, dass dieser wieder verlassen wird, sobald ein neues Kommando zur Abarbeitung ansteht, d.h. in diesem Zustand wartet die Chipkarte 10 in der Regel auf Kommandos von der Terminaleinrichtung 20. Erfindungsgemäß kann ebenso der in Figur 2 dargestellte Ruhezustand IS1 zur Prüfsummenberechnung genutzt werden. Wie im Fall der zufallsgesteuerten Wartezustände WS1 und WS2, kann sich eine Prüfsummenberechnung sowie ein Vergleich mit einer entsprechenden Soll-Prüfsumme über mehrere Ruhezustände erstrecken.

Der Fachmann wird erkennen, dass die Verwendung größerer Bereiche der Speichereinheit 16 bei der Berechnung der Ist-Prüfsummen den Vorteil bietet, dass weniger Soll-Prüfsummen gespeichert und weniger Vergleiche zwischen Ist- und Soll-Prüfsumme durchgeführt werden müssen, so dass weniger Speicherplatz und weniger Rechenkapazität verbraucht wird. Ein weiterer Vorteil der vorstehend beschriebenen bevorzugten Ausführungsform besteht darin, dass die während eines zufallsgesteuerten Wartezustands zur Verfügung stehende "freie Rechenzeit" der Prozessoreinheit 14 vollständig ausgenutzt wird.

Für den umgekehrten Fall, dass die Prozessoreinheit 14 mit der Berechnung der Ist-Prüfsumme und dem Vergleich mit einer entsprechenden Soll-Prüfsumme vor dem Ablauf eines zufallsgesteuerten Wartezustands fertig wird, kann gemäß bevorzugter Ausführungsformen der Erfindung vorgesehen sein, dass die Prozessoreinheit 14 für die verbleibende Restdauer des zufallsgesteuerten Wartezustands in einen zufallsgesteuerten Wartezustand gemäß dem Stand der Technik eintritt, d.h. einem Zustand indem die Prozessoreinheit 14 beispielsweise eine Warteschleife durchläuft.

Gemäß bevorzugter Ausführungsformen der Erfindung kann es sich bei der Prüfsumme beispielsweise um eine zyklische Redundanzprüfung ("Cyclic Redundancy Check"; CRC) handeln, mit der die Integrität der auf dem Speichereinheit 16 abgelegten Daten feststellbar ist. Vorzugsweise kann gemäß alternativer Ausführungsformen die Prüfsumme eine kryptographische Prüfsumme sein, wobei die kryptographische Prüfsumme unter Verwendung eines kryptographischen Geheimnisses erzeugt wird, insbesondere unter Verwendung eines symmetrischen und/oder asymmetrischen kryptographischen Verfahrens. Dabei können beliebige, an sich aus dem Stand der Technik bekannte Verfahren zur Generierung solcher Prüfsummen verwendet werden, insbesondere basierend auf kryptographischen Hash-Funktionen, wie z. B. SHA-1, MD5, HMAC-SHA1, HMAC-MD5, AES-CBC-MAC. Ebenso kann die Prüfsumme basierend auf Signaturen mit geeigneten Signatur-Algorithmen generiert werden, wie z. B. RSA, DSA, EC-DSA und dergleichen. Neben den vorstehend erwähnten bevorzugten Prüfsummen ist dem Fachmann eine Vielzahl von weiteren Prüfsummen bekannt, die erfindungsgemäß dazu geeignet sind, die Integrität der auf dem Speichereinheit 16 abgelegten Daten zu überprüfen. Für die Details zu weiteren erfindungsgemäß einsetzbaren Prüfsummen wird auf das Kapitel 6.5 des Buches "Handbuch der Chipkarten" von Wolfgang Rankl und Wolfgang Effing, 5. Auflage, 2008, verwiesen, auf das hiermit vollumfänglich Bezug gen genommen wird.

Wie der Fachmann erkennt, ist der Prozessoreinheit 14 zu Beginn eines zufallsgesteuerten Wartezustands die Dauer des zufallsgesteuerten Wartezustands bekannt, da diese beispielsweise mittels eines Zufallszahlengenerators vorab bestimmt wird. Vorzugsweise ist die Prozessoreinheit 14 dazu ausgestaltet, auf der Grundlage dieser der Prozessoreinheit 14 bekannten Dauer eines zufallsgesteuerten Wartezustands einen für die Prüfsummenberechnung geeigneten Bereich auszuwählen. Die Wahl des geeigneten Bereiches der Speichereinheit 16 kann von der Dauer des zufallsgesteuerten Wartezustands abhängen. Ist diese Dauer kurz, wird ein entsprechend kleiner Bereich ausgewählt, ist diese Dauer lang, wird ein entsprechend großer Bereich der Speichereinheit 16 ausgewählt. Vorzugsweise wird der Bereich der Speichereinheit 16 entsprechend seiner Größe so ausgewählt, dass spätestens am Ende eines zufallsgesteuerten Wartezustands die Berechnung der Ist-Prüfsumme vollständig abgeschlossen ist die Ist-Prüfsumme mit einer entsprechenden Soll-Prüfsumme verglichen worden ist.

Es ist beispielsweise denkbar, dass in der Speichereinheit 16 eine Liste von Soll-Prüfsummen für eine Vielzahl von ausgewählten Bereichen der Speichereinheit 16 zusammen mit Informationen darüber hinterlegt ist, wie lange die Berechnung der Prüfsumme des entsprechenden ausgewählten Bereichs dauert. Mittels der bekannten Dauer eines Wartezustands kann die Prozessoreinheit einen geeigneten Bereich der Speichereinheit 16 auswählen. Alternativ oder zusätzlich kann die Prozessoreinheit 14 dazu ausgestaltet sein, "on the fly" einen geeigneten Bereich der Speichereinheit 16 auszuwählen, indem auf der Grundlage einer mittleren Zugriffszeit auf die Speichereinheit 16 die maximale Größe eines Bereichs der Speichereinheit 16 bestimmt wird, für den während des zufallsgesteuerten Wartezustands noch eine Prüfsumme berechnet werden kann.

Der Fachmann wird erkennen, dass die vorstehend beschriebene Bestimmung bzw. Auswahl eines geeigneten Bereichs der Speichereinheit 16 durch die Prozessoreinheit 14 erfindungsgemäß auch in dem Fall verwendet werden kann, dass sich die Berechnung einer Prüfsumme über mehrere zufallsgesteuerte Wartezustände erstreckt, die in eine von der Prozessoreinheit 14 abzuarbeitende Routine mit mehreren Kommandos eingefügt sind, wie dies vorstehend als bevorzugte Ausführungsform beschrieben worden ist. Denn in diesem Fall sind der Prozessoreinheit 14 die Anzahl der Kommandos einer Routine und damit die Anzahl der in diese Routine einzufügenden Wartezustände sowie die ungefähre mittlere Dauer eines Wartezustands bekannt, auf deren Grundlage sich die für die Prüfsummenberechnung und einen Vergleich mit einer entsprechenden Soll-Prüfsumme zur Verfügung stehende "Rechenzeit" der Prozessoreinheit 14 abschätzen lässt.

Für den bevorzugten Fall, dass die Speichereinheit 16 einen Flash-Speicher umfasst, kann es sich bei dem ausgewählten Bereich der Speichereinheit 16 um eine oder mehrere Pages bzw. Seiten des Flash-Speichers handeln, insbesondere um derartige Pages bzw. Seiten, in denen sicherheitskritische Daten hinterlegt sind, deren Integrität für eine korrekte Funktionsweise der Chipkarte 10 notwendig ist.

Figur 3 zeigt eine schematische Detaildarstellung des zufallsgesteuerten Wartezustands WS1 gemäß einer bevorzugten Ausführungsform der Erfindung. Die in Figur 3 dargestellte bevorzugte Ausführungsform unterscheidet sich von der im Zusammenhang mit Figur 2 beschriebenen Ausführungsform im Wesentlichen darin, dass während der Dauer des zufallsgesteuerten

Wartezustands WS1 nicht eine Ist-Prüfsumme berechnet und mit einer entsprechenden Soll-Prüfsumme verglichen wird oder lediglich ein Teil davon berechnet wird, sondern dass die Dauer des zufallsgesteuerten Wartezustands WS1 in zwei vorzugsweise im Wesentlichen gleich lange Abschnitte WSla und WS1b unterteilt wird. Eine derartige Unterteilung in die Abschnitte WSla und WS1b kann von der Prozessoreinheit 14 vorgenommen werden, da die Dauer des zufallsgesteuerten Wartezustands WS1 von der Prozessoreinheit 14 vorzugsweise vorab bestimmt wird (beispielsweise mittels eines Zufallszahlengenerators) und somit dieser bekannt ist.

Vorzugsweise werden während des ersten Abschnitts WSla des zufallsgesteuerten Wartezustands WS1 eine erste Ist-Prüfsumme und während des zweiten Abschnitts WS1b eine zweite Ist-Prüfsumme über die Daten eines zuvor ausgewählten Bereichs der Speichereinheit 16 berechnet. Die erste Ist-Prüfsumme und die zweite Ist-Prüfsumme können miteinander und/ oder mit einer entsprechenden Soll-Prüfsumme für diesen Bereich der Speichereinheit 16 verglichen werden. Ein besonderer Vorteil der in Figur 3 dargestellten bevorzugten Ausführungsform besteht darin, dass zeitnah erkannt werden kann, ob ein Lichtangriff während des zufallsgesteuerten Wartezustands WS1 stattgefunden hat, so dass entsprechende Gegenmaßnahmen ergriffen werden können, wie beispielsweise ein Sperren der Chipkarte 10. Dies kann nämlich dann der Fall sein, wenn die erste während des Abschnitts WSla bestimmte Ist-Prüfsumme nicht gleich der zweiten während des Abschnitts WS1b bestimmten Ist-Prüfsumme ist.

## Patentansprüche

1. Verfahren zum Betreiben eines portablen Datenträgers (10) mit einer Prozessoreinheit (14) zur Abarbeitung von Befehlen und einer Speichereinheit (16) zum Speichern von Daten, wobei in die Abarbeitung der Befehle zufallsgesteuerte Wartezustände eingefügt werden, **dadurch gekennzeichnet, dass** während eines zufallsgesteuerten Wartezustands eine Ist-Prüfsumme über die Daten eines ausgewählten Bereichs der Speichereinheit (16) berechnet wird.

2. Verfahren nach Anspruch 1, wobei das Verfahren den weiteren Schritt des Vergleichens der über die Daten eines ausgewählten Bereichs der Speichereinheit (16) berechneten Ist-Prüfsumme mit einer Soll-Prüfsumme für die Daten dieses ausgewählten Bereichs der Speichereinheit (16) umfasst.

3. Verfahren nach Anspruch 2, wobei der weitere Betrieb des portablen Datenträgers (10) gesperrt wird, falls der Vergleich der Ist-Prüfsumme mit der Soll-Prüfsumme ergibt, dass die Ist-Prüfsumme nicht gleich der Soll-Prüfsumme ist.

4. Verfahren nach Anspruch 2, wobei die Schritte des Berechnens der Ist-Prüfsumme über die Daten eines ausgewählten Bereichs der Speichereinheit (16) und des Vergleichens der Ist-Prüfsumme mit einer Soll-Prüfsumme innerhalb eines zufallsgesteuerten Wartezustands begonnen und abgeschlossen werden.

5. Verfahren nach Anspruch 1, wobei sich die Berechnung der Ist-Prüfsumme über die Daten eines ausgewählten Bereichs der Speichereinheit (16) über mehr als einen zufallsgesteuerten Wartezustand erstreckt.

6. Verfahren nach Anspruch 5, wobei die von der Prozessoreinheit (14) abzuarbeitenden Befehle Teil einer Befehlsroutine sind und wobei die Berechnung der Ist-Prüfsumme über die Daten eines ausgewählten Bereichs der Speichereinheit (16) nach der Abarbeitung des letzten Befehls der Befehlsroutine im Rahmen eines zufallsgesteuerten Wartezustands, eines Ruhezustands oder eines Wartezustand mit einer durch die Prozessoreinheit (14) vorgegebenen Dauer abgeschlossen wird.

7. Verfahren nach Anspruch 1, wobei der ausgewählte Bereich der Speichereinheit (16) zur Berechnung der Ist-Prüfsumme über die darin gespeicherten Daten von der Prozessoreinheit (14) auf der Grundlage der Dauer des zufallsgesteuerten Wartezustands ausgewählt wird.

8. Verfahren nach Anspruch 1, wobei der zufallsgesteuerte Wartezustand in zwei im Wesentlichen gleich lange Abschnitte unterteilt ist, wobei während beider Abschnitte des zufallsgesteuerten Wartezustands eine Ist-Prüfsumme über die Daten desselben ausgewählten Bereichs der Speichereinheit (16) berechnet wird.

9. Verfahren nach einem der vorhergehenden Ansprüche, wobei es sich bei der Ist-Prüfsumme um eine CRC-Prüfsumme oder eine kryptographische Prüfsumme handelt, wobei die kryptographische Prüfsumme unter Verwendung eines symmetrischen und/ oder asymmetrischen kryptographischen Verfahrens erzeugt wird, insbesondere basierend auf kryptographischen Hash-Funktionen, wie z. B. SHA-1, MD5, HMAC-SHA1, HMAC-MD5, AES-CBC-MAC und dergleichen, oder basierend auf Signaturen mit geeigneten Signatur-Algorithmen, wie z. B. RSA, DSA, EC-DSA und dergleichen.

10. Verfahren nach einem der vorhergehenden Ansprüche, **dadurch gekennzeichnet, dass** in die Abarbeitung der Befehle die zufallsgesteuerten Wartezustände zur Abwehr von SPA/DPA-Angriffen eingefügt werden.

11. Portabler Datenträger (10) mit einer Prozessoreinheit (14) und einer Speichereinheit (16), wobei der portable Datenträger (10) dazu ausgestaltet ist, gemäß einem Verfahren nach einem der vorhergehenden Ansprüche betrieben zu werden.

## Claims

1. A method for operating a portable data carrier (10) having a processing unit (14) for processing commands and a memory unit (16) for storing data, with random wait states being inserted into the processing of the commands, **characterized in that** an actual checksum is computed over the data of a selected region of the memory unit (16) during a random wait state.

2. The method according to claim 1, wherein the method comprises the further step of comparing the actual checksum computed over the data of a selected region of the memory unit (16) with an expected checksum for the data of said selected region of the memory unit (16).

3. The method according to claim 2, wherein the further operation of the portable data carrier (10) is blocked if the comparison of the actual checksum with the expected checksum yields that the actual checksum does not match the expected checksum.

4. The method according to claim 2, wherein the steps of computing the actual checksum over the data of a selected region of the memory unit (16) and of comparing the actual checksum with an expected checksum are begun and terminated within a random wait state.

5. The method according to claim 1, wherein the computation of the actual checksum over the data of a selected region of the memory unit (16) extends over more than one random wait state.

6. The method according to claim 5, wherein the commands to be processed by the processing unit (14) are part of a command routine, and wherein the computation of the actual checksum over the data of a selected region of the memory unit (16) is terminated after the processing of the last command of the command routine within the context of a random wait state, an idle state or a wait state having a duration prespecified by the processing unit (14).

7. The method according to claim 1, wherein the selected region of the memory unit (16) for computing the actual checksum over the data stored therein by the processing unit (14) is selected on the basis of the duration of the random wait state.

8. The method according to claim 1, wherein the random wait state is subdivided into two substantially equally long portions, with an actual checksum being computed over the data of the same selected region of the memory unit (16) during both portions of the random wait state.

9. The method according to any of the preceding claims, wherein the actual checksum is a CRC checksum or a cryptographic checksum, with the cryptographic checksum being generated while employing a symmetric and/or asymmetric cryptographic method, in particular on the basis of cryptographic hash functions, such as SHA-1, MD5, HMAC-SHA1, HMAC-MD5, AES-CBC-MAC, and the like, or on the basis of signatures with suitable signature algorithms, such as RSA, DSA, EC-DSA, and the like.

10. The method according to any of the preceding claims, **characterized in that** the random wait states are inserted into the processing of the commands, for thwarting SPA/DPA attacks.

11. A portable data carrier (10) having a processing unit (14) and a memory unit (16), wherein the portable data carrier (10) is configured for being operated by a method according to any of the preceding claims.

## Revendications

1. Procédé d'exploitation d'un support de données (10) portable comprenant une unité processeur (14) pour le traitement d'ordres et une unité mémoire (16) pour la mémorisation de données, cependant que, dans le traitement des ordres, des états d'attente aléatoirement commandés sont insérés, **caractérisé en ce que**, pendant un état d'attente aléatoirement commandé, une somme de contrôle réelle est calculée sur les données d'une zone sélectionnée de l'unité mémoire (16).

2. Procédé selon la revendication 1, le procédé comprenant l'étape supplémentaire de la comparaison de la somme de contrôle réelle, calculée sur les données d'une zone sélectionnée de l'unité mémoire (16), avec une somme de contrôle désirée pour les données de cette zone sélectionnée de l'unité mémoire (16).

3. Procédé selon la revendication 2, le maintien en marche du support de données (10) portable étant bloqué si la comparaison de la somme de contrôle réelle avec la somme de contrôle désirée révèle que la somme de contrôle réelle n'est pas égale à la somme de contrôle désirée.

4. Procédé selon la revendication 2, les étapes du calcul de la somme de contrôle réelle sur les données d'une zone sélectionnée de l'unité mémoire (16) et de la comparaison de la somme de contrôle réelle avec une somme de contrôle désirée étant débutées et achevées dans les limites d'un état d'attente aléatoirement commandé.

5. Procédé selon la revendication 1, le calcul de la somme de contrôle réelle sur les données d'une zone sélectionnée de l'unité mémoire (16) s'étendant sur plus d'un état d'attente aléatoirement commandé.

6. Procédé selon la revendication 5, les ordres à traiter par l'unité processeur (14) faisant partie d'une routine d'ordres et le calcul de la somme de contrôle réelle sur les données d'une zone sélectionnée de l'unité mémoire (16) étant achevé après le traitement du dernier ordre de la routine d'ordres dans le cadre d'un état d'attente aléatoirement commandé, d'un état de repos ou d'un état d'attente d'une durée prescrite par l'unité processeur (14).

7. Procédé selon la revendication 1, la zone sélectionnée de l'unité mémoire (16) étant, pour le calcul de la somme de contrôle réelle sur les données y étant mémorisées (16), sélectionnée par l'unité processeur (14) sur la base de la durée de l'état d'attente aléatoirement commandé.

8. Procédé selon la revendication 1, l'état d'attente aléatoirement commandé étant divisé en deux parties de longueur essentiellement égale, cependant que, pendant les deux parties de l'état d'attente aléatoirement commandé, une somme de contrôle réelle est calculée sur les données de la même zone sélectionnée de l'unité mémoire (16).

9. Procédé selon une des revendications précédentes, la somme de contrôle réelle consistant en une somme de contrôle CRC ou en une somme de contrôle cryptographique, la somme de contrôle cryptographique étant générée par utilisation d'un procédé cryptographique symétrique et/ou asymétrique, en particulier basé sur des fonctions Hash cryptographiqués telles que p. ex. SHA-1, MD5, HMAC-SHA1, HMAC-MD5, AEC-CBC-MAC et fonctions similaires, ou basé sur des signatures à algorithmes des signature appropriés tesl que p. ex. RSA, DSA, EC-DSA et signatures similaires.

10. Procédé selon une des revendications précédentes, **caractérisé en ce que**, dans le traitement des ordres, les états d'attente aléatoirement commandés sont insérés pour la défense contre des attaques SPA / DPA.

11. Support de données (10) portable comprenant une unité processeur (14) et une unité mémoire (16), le support de données (10) portable étant conçu pour être exploité conformément à un procédé selon une des revendications précédentes.
